# EUROPEAN PATENT APPLICATION

(11) **EP 4 715 629 A1**
(43) Date of publication of application: **25.03.2026**
(21) Application number: 25152798.2
(22) Date of filing: 20.01.2025
(51) Int. Cl.: G06F 16/3329, G06F 40/30

(54) **METHOD AND SYSTEM FOR LARGE LANGUAGE MODEL (LLM)-SELECTION FOR RESPONSE GENERATION TO USER QUERIES**

(30) Priority: 23.09.2024 IN 202441071931
(71) Applicant: L & T Technology Services Limited, Chennai, Tamil Nadu 600089 (IN)
(72) Inventor: PATTHAR, Raghunandan, 560076 Bangalore (IN); NAGESH, Thejas, 560061 Bangalore (IN); INJALKAR, Vinay, 560105 Bangalore (IN)
(74) Representative: Studio Torta S.p.A.

(57) **Abstract**

Disclosed herein, is a method (400) and system (100) for selecting a LLM for response generation to user queries. The method (400) includes receiving (402) a user query from a user device. The method (400) includes determining (404), for the user query, a query type from a set of query types through a fine-tuned text classification model. The method (400) includes retrieving (406) a plurality of document embeddings based on the user query and the query type from a vector database through a semantic search technique. The method (400) includes preparing (408) a prompt using the user query and the plurality of document embeddings. The method (400) includes inputting (410) the prompt to an LLM selected from a set of LLMs based on the query type. The method (400) includes generating (412), via the selected LLM, a response to the user query based on the prompt.

## Description

### Technical Field

This disclosure generally relates to Retrieval-Augmented Generation (RAG)-assisted Large Language Models (LLMs), and more particularly to method and system for LLM-selection for response generation to user queries.

### Background

Retrieval-Augmented Generation (RAG) is an information retrieval technique that provides relevant information to Large Language Models (LLMs), thereby facilitating the LLMs to generate more context and domain-specific responses. However, conventional RAG-assisted LLMs are generally configured for generating responses to specific query types. For example, models configured for illustrative queries may fail to provide accurate responses to factual (or straightforward) queries, and vice versa.

Moreover, in the present state of art, methods for accurate evaluation of responses based on query type of the query do not exist. Additionally, the conventional RAG-assisted LLMs fail to accurately determine intent of follow-up queries. There is, therefore, a need for techniques to enhance text retrieval in RAG-assisted LLMs.

### SUMMARY

In one embodiment, a method of Large Language Model (LLM)-selection for response generation to user queries is disclosed. In one example, the method may include receiving a user query from a user device. The method may further include determining, for the user query, a query type from a set of query types through a fine-tuned text classification model. The method may further include retrieving a relevant set of a plurality of document embeddings based on the user query and the query type from a vector database through a semantic search technique. The method may further include preparing a prompt using the user query and the relevant set of the plurality of document embeddings. The method may further include inputting the prompt to an LLM selected from a set of LLMs based on the query type. Each of the set of LLMs is configured to optimally process queries of one of the set of query types. The method may further include generating, via the selected LLM a response to the user query based on the prompt.

In another embodiment, a system for LLM-selection for response generation to user queries is disclosed. In one example, the system may include a processor and a computer-readable medium communicatively coupled to the processor. The computer-readable medium may store processor-executable instructions, which, on execution, may cause the processor to receive a user query from a user device. The processor-executable instructions, on execution, may further cause the processor to determine, for the user query, a query type from a set of query types through a fine-tuned text classification model. The processor-executable instructions, on execution, may further cause the processor to retrieve a relevant set of a plurality of document embeddings based on the user query and the query type from a vector database through a semantic search technique. The processor-executable instructions, on execution, may further cause the processor to prepare a prompt using the user query and the relevant set of the plurality of document embeddings. The processor-executable instructions, on execution, may further cause the processor to input the prompt to an LLM selected from a set of LLMs based on the query type. It should be noted that each of the set of LLMs is configured to optimally process queries of one of the set of query types. The processor-executable instructions, on execution, may further cause the processor to generate, via the selected LLM, a response to the user query based on the prompt.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for Large Language Model (LLM)-selection for response generation to user queries, in accordance with some embodiments of the present disclosure.
**FIG. 2** illustrates a functional block diagram of various modules within a memory of the computing device configured for LLM-selection for response generation to user queries, in accordance with some embodiments of the present disclosure.
**FIG. 3** illustrate a flow diagram of an exemplary process for generating sample query-response pairs, in accordance with some embodiments of the present disclosure.
**FIG. 4** illustrates a flow diagram of an exemplary process for LLM-selection for response generation to user queries, in accordance with some embodiments of the present disclosure.
**FIG. 5** illustrates a flow diagram of an exemplary process for evaluating query-response pairs, in accordance with some embodiments of the present disclosure.
**FIG. 6** illustrates a flow diagram of an exemplary process for managing follow-up queries to user queries, in accordance with some embodiments of the present disclosure.
**FIG. 7** illustrates an exemplary chatbot Graphical User Interface (GUI), in accordance with some embodiments of the present disclosure.
**FIG. 8** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

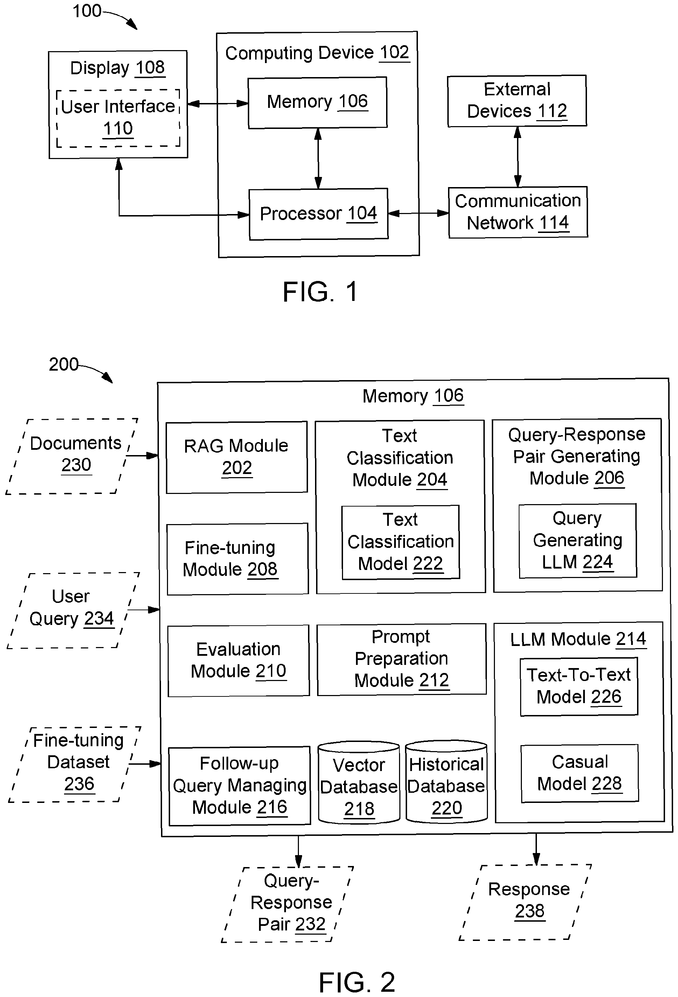

Referring now to FIG. 1, an exemplary system 100 for Large Language Model (LLM)-selection for response generation to user queries is illustrated, in accordance with some embodiments of the present disclosure. The system 100 may include a computing device 102. The computing device 102 may be, for example, but may not be limited to, server, desktop, laptop, notebook, netbook, tablet, smartphone, mobile phone, or any other computing device, in accordance with some embodiments of the present disclosure. The computing device 102 may implement LLM-selection for response generation to user queries. The computing device 102 may be based on a Retrieval Augmented Generation (RAG)-assisted hybrid LLM to provide responses to user queries with high coherence and high relevance.

As will be described in greater detail in conjunction with FIGS. 2-8, the computing device 102 may receive a user query from a user device. The computing device 102 may further determine, for the user query, a query type from a set of query types through a fine-tuned text classification model. The computing device 102 may further retrieve a relevant set of a plurality of document embeddings based on the user query and the query type from a vector database through a semantic search technique. The computing device 102 may further prepare a prompt using the user query and the relevant set of the plurality of document embeddings. The computing device 102 may further input the prompt to an LLM selected from a set of LLMs based on the query type. It should be noted that each of the set of LLMs is configured to optimally process queries of one of the set of query types. The computing device 102 may further generate, via the selected LLM, a response to the user query based on the prompt.

In some embodiments, the computing device 102 may include one or more processors 104 and a memory 106. Further, the memory 106 may store instructions that, when executed by the one or more processors 104, cause the one or more processors 104 to select an LLM for response generation to user queries, in accordance with aspects of the present disclosure. The memory 106 may also store various data (for example, document embeddings, user queries (i.e., chat history), a set of LLMs, a vector database, query embeddings, and the like) that may be captured, processed, and/or required by the system 100. The memory 106 may be a non-volatile memory (e.g., flash memory, Read Only Memory (ROM), Programmable ROM (PROM), Erasable PROM (EPROM), Electrically EPROM (EEPROM) memory, etc.) or a volatile memory (e.g., Dynamic Random Access Memory (DRAM), Static Random-Access memory (SRAM), etc.).

The system 100 may further include a display 108. The system 100 may interact with a user interface 110 accessible via the display 108. The system 100 may also include one or more external devices 112. In some embodiments, the computing device 102 may interact with the one or more external devices 112 over a communication network 114 for sending or receiving various data. The communication network 114 may include, for example, but may not be limited to, a wireless fidelity (Wi-Fi) network, a light fidelity (Li-Fi) network, a local area network (LAN), a wide area network (WAN), a metropolitan area network (MAN), a satellite network, the internet, a fiber optic network, a coaxial cable network, an infrared (IR) network, a radio frequency (RF) network, and a combination thereof. The one or more external devices 112 may include, but may not be limited to, a remote server, a laptop, a netbook, a notebook, a smartphone, a mobile phone, a tablet, or any other computing device.

Referring now to FIG. 2, a functional block diagram of various modules within a memory (such as the memory 106) of the computing device 102 configured for LLM-selection for response generation to user queries is illustrated, in accordance with some embodiments of the present disclosure. FIG. 2 is explained in conjunction with FIG. 1. The memory 106 of the computing device 102 may include a RAG module 202, a text classification module 204, a query-response pair generating (QRPG) module 206, a fine-tuning module 208, an evaluation module 210, prompt preparation module 212, an LLM module 214, a follow-up query managing module 216, a vector database 218, and a historical database 220. The text classification module 204 may include a text classification model 222. The QRPG module 206 may include a query generating LLM 224. The LLM module 214 may include a text-to-text model 226 and a causal model 228. Each of the text classification model 222, the query generating LLM 224, the text-to-text model 226, and the causal model 228 may be an open-source LLM (such as Large Language Model Meta AI (LLaMA), Falcon LLM, BLOOM, etc.) or a proprietary LLM (such as Generative Pre-trained Transformer (GPT)-4, Gemini, etc.).

In an exemplary scenario, an administrator (such as a developer, a tester, a maintainer, or a super user) may access the computing device 102 through an administrator device (not shown in figure). The administrator device may be, for example, but may not be limited to, server, desktop, laptop, notebook, netbook, tablet, smartphone, mobile phone, or any other computing device. The administrator may provide a plurality of documents 230 via a Graphical User Interface (GUI) rendered on the administrator device. Each of the plurality of documents 230 may be in one of a text format, a tabular format, an image format, an audio format, or a video format. Thus, the plurality of documents 230 may be provided as text data or multimodal data. In some embodiments, Uniform Resource Locator (URL) of the plurality of documents 230 may be provided.

The RAG module 202 may receive the plurality of documents 230 from the administrator device. Further, the RAG module 202 may generate a plurality of document chunks from the plurality of documents 230. The RAG module 202 may send the plurality of document chunks to the QRPG module 206. Further, the RAG module 202 may create a plurality of document embeddings via an embedding model from the plurality of document chunks. The RAG module 202 may include the embedding model. By way of an example, the embedding model may be a traditional word embedding model (such as word2vec, Glove, etc.) or a contextual embedding model (such as ELMo, BERT, other transformer-based models, etc.). Further, the RAG module 202 may store the plurality of document embeddings in the vector database 218.

Further, the QRPG module 206 may receive the plurality of document chunks from the RAG module 202. Further, the QRPG module 206 may randomly select one or more of the plurality of document chunks. Further, the QRPG module 206 may generate, via the query generating LLM 224, a plurality of sample queries based on the one or more of the plurality of document chunks. It should be noted that each of the plurality of sample queries may be of one of a set of query types. In an embodiment, the set of query types may include a factual (or straightforward) query type and an illustrative (or descriptive) query type. By way of an example, the factual query type may include queries that include interrogative sentences (such as queries that begin with words or phrases like "what", "when", "how", "is it okay", etc.) and the illustrative query type may include queries that require more descriptive responses (such as queries that begin with words like "describe", "summarize", "elaborate", etc.). In an embodiment, each of the plurality of sample queries may be labelled with an associated query type.

Further, the QRPG module 206 may randomly select one or more of the plurality of sample queries. For each sample query of the one or more of the plurality of sample queries, the QRPG module 206 may invoke the RAG module 202 to retrieve a relevant set of the plurality of document embeddings based on the sample query and an associated query type from the vector database 218 through a semantic search technique. Additionally, the RAG module 202 may generate a plurality of sample query embeddings obtained from chunks of the sample query. The semantic search technique may use the plurality of sample query embeddings to identify the relevant set of the plurality of document embeddings.

The relevant set of the plurality of document embeddings, obtained using the semantic search technique, may correspond to relevant document chunks corresponding to the sample query and the associated query type. In other words, the relevant set of the plurality of document embeddings may be a subset of the plurality of document embeddings stored in the vector database 218. Further, the RAG module 202 may send the relevant set of the plurality of document embeddings and the sample query to the prompt preparation module 212. The prompt preparation module 212 may prepare a sample prompt using the sample query and the relevant set of the plurality of document embeddings. The sample prompt may include a predefined template text, the sample query, and the relevant set of the plurality of document embeddings. In an embodiment, the relevant set of the plurality of document embeddings may be reordered in the prompt to address biases in focus towards a first and last retrieved document embeddings. Further, the prompt preparation module 212 may send the sample prompt to the LLM module 214.

The LLM module 214 may input the sample prompt to an LLM selected from the set of LLMs based on the associated query type of the sample query. It should be noted that each of the set of LLMs is configured to optimally process queries of one of the set of query types. In an embodiment, the set of LLMs may include the text-to-text model 226 and the causal model 228. In such an embodiment, the text-to-text model 226 may be configured to optimally process factual queries whereas the causal model 228 may be configured to optimally process illustrative queries. It may be noted that the set of LLMs may include additional LLMs optimally configured to generate responses to queries of other query types without limiting the set of query types and the set of LLMs.

In an embodiment, the query type of the sample query may be identified through an associated label of the sample query. Based on the identified query type, the LLM module 214 may select the LLM from the set of LLMs. Further, the LLM module 214 may input the sample prompt to the selected LLM. Further, the LLM module 214 may generate, via the selected LLM, a sample response for the sample prompt to obtain a sample query-response pair 232.

Further, the LLM module 214 may send the sample query-response pair 232 to the evaluation module 210. The evaluation module 210 may calculate a coherence score for the sample query-response pair 232, based on a query-response cosine similarity. Further, the evaluation module 210 may calculate a relevance score for the sample query-response pair 232, based on a number of common query-response words or tokens. Further, the evaluation module 210 may render the sample query-response pair 232, the coherence score, and the relevance score via the GUI on the administrator device. The administrator may refer to the sample query-response pair 232, the coherence score, and the relevance score to validate the selected LLM.

In an embodiment, the administrator may interact with the computing device 102 through a GUI rendered on a display of the computing device 102. In such scenarios, the administrator device may not be required. The computing device 102 (more specifically, the RAG module 202) may receive administrator inputs (i.e., the plurality of documents 230) through the GUI. The computing device 102 may locally host the modules 202-220 and the models 222-228. Thus, the sample query-response pair 232 may also be rendered via the GUI on the display of the computing device 102.

Additionally, the evaluation module 210 may evaluate the sample query-response pair 232, based on the coherence score and the relevance score. The evaluation may include a comparison of the coherence score and the relevance score with the predefined threshold coherence score and the predefined threshold relevance score, respectively. The evaluation module 210 may send the evaluation results (i.e., the coherence score, the relevance score, and comparison results) to the fine-tuning module 208. Further, the fine-tuning module 208 may fine-tune the selected LLM based on the evaluation.

In another exemplary scenario, a user (such as an end user) may access the computing device 102 through a user device (not shown in figure). The user device may be, for example, but may not be limited to, server, desktop, laptop, notebook, netbook, tablet, smartphone, mobile phone, or any other computing device. In an embodiment, the administrator and the user may represent the same individual (for example, the user may have root access/administrative rights). In such an embodiment, the administrator device and the user device may correspond to a single computing device. The user may provide a user query 234 via the GUI from the user device. The text classification module 204 may receive the user query 234 from the user device. Further, the text classification module 204 may determine, for the user query, a query type from a set of query types through the fine-tuned text classification model 222. In an embodiment, the fine-tuned text classification model 222 may be a binary text classification LLM. Upon identifying the query type, the text classification module 204 may send the user query and the associated query type to the RAG module 202.

The fine-tuned text classification model 222 may be obtained by the fine-tuning module 208. The fine-tuning module 208 may fine-tune a text classification model (such as a pre-trained LLM) using a fine-tuning dataset 236 through a Parameter Efficient Fine Tuning (PEFT) with a Low Rank Adaptation (LoRA) technique to obtain the fine-tuned text classification model 222. The fine-tuning dataset 236 may be a custom dataset. It should be noted that each data element of the fine-tuning dataset 236 may include a query and an associated query type label. The custom fine-tuned text classification model 222 may provide a better routing accuracy, reduce the requirement for manually updating keywords, and handle diverse question patterns more effectively by predicting the query type from the set of query types.

Further, the RAG module 202 may retrieve the relevant set of the plurality of document embeddings based on the user query 234 and the query type from the vector database 218 through the semantic search technique. The RAG module 202 may generate a plurality of query embeddings from chunks of the user query 234. The semantic search technique may compare the plurality of query embeddings with the plurality of document embeddings to obtain the relevant set of the plurality of document embeddings.

The relevant set of the plurality of document embeddings, obtained using the semantic search technique, may correspond to relevant document chunks corresponding to the user query 234 and the associated query type. In other words, the relevant set of the plurality of document embeddings may be a subset of the plurality of document embeddings stored in the vector database 218. Further, the prompt preparation module 212 may prepare a prompt using the user query 234 and the plurality of document embeddings. The prompt may include a predefined template text, the user query 234, and the relevant set of the plurality of document embeddings. In an embodiment, the relevant set of the plurality of document embeddings may be reordered in the prompt to address biases in focus towards a first and last retrieved document embeddings.

The prompt preparation module 212 may send the prompt to the LLM module 214. Further, the LLM module 214 may input the prompt to an LLM selected from a set of LLMs based on the query type. Each of the set of LLMs is configured to optimally process queries of one of the set of query types. Further, the LLM module 214 may generate, via the selected LLM, a response 238 to the user query 234 based on the prompt. In some embodiments, the LLM module 214 may render the user query 234 and the corresponding response 238 via the GUI on the user device.

Further, the LLM module 214 may send the response 238 to the evaluation module 210. The evaluation module 210 may calculate the coherence score for the user query 234 and the response 238, based on the query-response cosine similarity. Further, the evaluation module 210 may calculate the relevance score for the user query 234 and the response 238, based on the number of common query-response words or tokens. Further, the evaluation module 210 may evaluate the user query 234 and the response 238, based on the coherence score and the relevance score. The evaluation may include a comparison of the coherence score and the relevance score with the predefined threshold coherence score and the predefined threshold relevance score, respectively. Further, the evaluation module 210 may send the evaluation results (i.e., the coherence score, the relevance score, and comparison results) to the fine-tuning module 208 and the LLM module 214. In some embodiments, the LLM module 214 may render the evaluation results via the GUI on the user device. The fine-tuning module 208 may fine-tune the selected LLM based on the evaluation.

Further, the LLM module 214 may store the user query 234 and the response 238 in the historical database 220. The historical database 220 may include a plurality of historical user queries (including the user query 234) and a corresponding plurality of historical responses (including the response 238). In an embodiment, there may be a limit to maximum number of historical user queries and historical responses that may be stored in the historical database 220. It may be noted that the historical database 220 may be associated with a user account (or profile) corresponding to the user.

When the user provides a subsequent user query (i.e., a query subsequent to the user query), the follow-up query managing module 216 may receive the subsequent user query. Further, the follow-up query managing module 216 may calculate a semantic similarity score between a subsequent user query and each of the plurality of historical user queries. The plurality of historical user queries may include the user query. Further, the follow-up query managing module 216 may identify the subsequent user query as a follow-up query to one of the plurality of user queries based on a predefined semantic similarity threshold. Further, the follow-up query managing module 216 may extract a plurality of parts of speech (PoS) from the one of the plurality of user queries using a Natural Language Processing (NLP) technique. Further, the follow-up query managing module 216 may modify (or rephrase) the follow-up query using the extracted plurality of PoS.

The follow-up query managing module 216 may then send the modified (or rephrased) follow-up query to the text classification module 204 to determine the query type of the follow-up query. Further, the follow-up query may be processed similar to the user query. The RAG module 202 may retrieve embeddings relevant to the follow-up query and, optionally, the historical queries associated with the follow-up query, from the vector database 218. Further, the prompt preparation module 212 may prepare a prompt based on the predefined text, the follow-up query (and optionally, the associated historical queries), and the relevant embeddings. The LLM module 214 may input the prompt to one of the set of LLMs selected based on the query type to generate a follow-up response. Thus, the follow-up responses are generated through an auto-learning capability. This also enhances user engagement.

In an embodiment, each user query may first be received by the follow-up query managing module 216 to check whether the received user query is a follow-up query to any of the plurality of historical user queries. Upon performing the check, the follow-up query managing module 216 may send the user query (in original form or modified form) to the text classification module 204. The user query may then be processed through the aforementioned modules 202-220 and the models 222-228.

In an embodiment, the user may interact with the computing device 102 through a GUI rendered on the display of the computing device 102. In such scenarios, the user device may not be required. The computing device 102 (more specifically, the RAG module 202 and the text classification module 204) may receive user inputs (i.e., the user query 234) through the GUI. The computing device 102 may locally host the modules 202-220 and the models 222-228. Thus, the response 238 may also be rendered via the GUI on the display of the computing device 102.

It should be noted that all such aforementioned modules 202 - 220 may be represented as a single module or a combination of different modules. Further, as will be appreciated by those skilled in the art, each of the modules 202 - 220 may reside, in whole or in parts, on one device or multiple devices in communication with each other. In some embodiments, each of the modules 202 - 220 may be implemented as dedicated hardware circuit comprising custom application-specific integrated circuit (ASIC) or gate arrays, off-the-shelf semiconductors such as logic chips, transistors, or other discrete components. Each of the modules 202 - 220 may also be implemented in a programmable hardware device such as a field programmable gate array (FPGA), programmable array logic, programmable logic device, and so forth. Alternatively, each of the modules 202 - 220 may be implemented in software for execution by various types of processors (e.g., processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module, and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for LLM-selection for response generation to user queries. For example, the exemplary system 100 and the associated computing device 102, may select LLMs for response generation to user queries by the processes discussed herein. In particular, as will be appreciated by those of ordinary skill in the art, control logic and/or automated routines for performing the techniques and steps described herein may be implemented by the system 100 and the associated computing device 102, either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

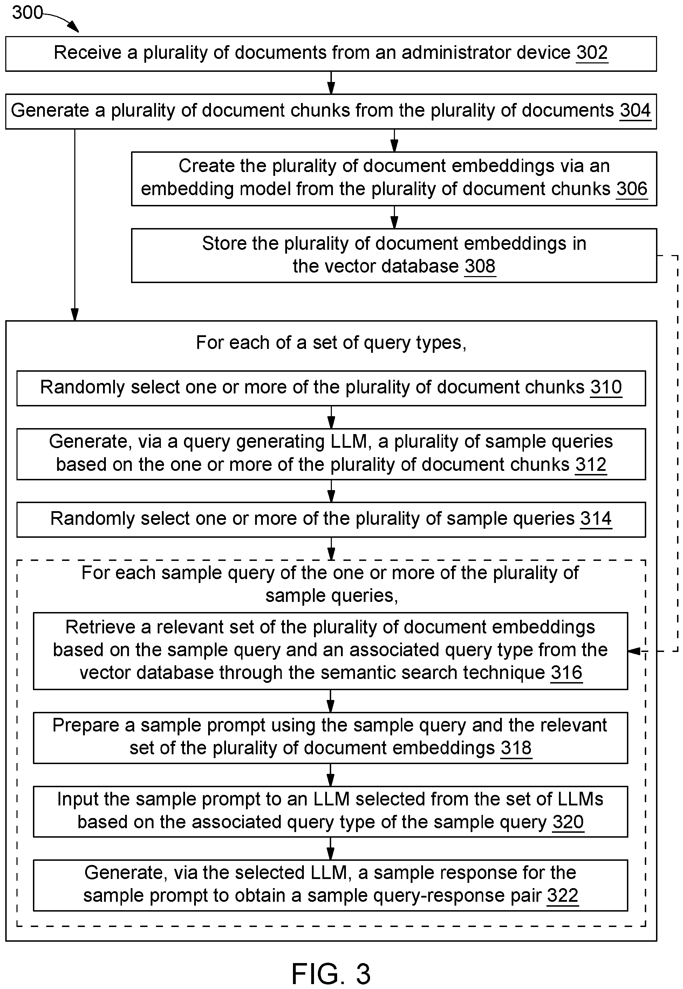

Referring now to FIG. 3, an exemplary process 300 for generating sample query-response pairs is depicted via a flow chart, in accordance with some embodiments of the present disclosure. The exemplary process 300 may be implemented by the computing device 102 of the system 100. The process 300 may include receiving a plurality of documents (for example, the plurality of documents 230) from an administrator device, at step 302. Further, the process 300 may include generating a plurality of document chunks from the plurality of documents, at step 304.

Upon generating the plurality of document chunks at step 304, the process 300 may include creating the plurality of document embeddings via an embedding model from the plurality of document chunks, at step 306. Further, the process 300 may include storing the plurality of document embeddings in a vector database (for example, the vector database 218), at step 308. By way of an example, the administrator may provide a plurality of documents as an input through the GUI to the computing device 102. The RAG module 202 may receive the plurality of documents. Further, the RAG module 202 may generate a plurality of document chunks from the plurality of documents. Further, the RAG module 202 may generate a plurality of document embeddings from the plurality of document chunks. Further, the RAG module 202 may store the plurality of document embeddings in the vector database 218.

Additionally, upon generating the plurality of document chunks at step 304, the process 300 may include randomly selecting one or more of the plurality of document chunks, at step 310. Further, for each of the set of query types, the process 300 may include generating, via a query generating LLM, a plurality of sample queries based on the one or more of the plurality of document chunks, at step 312. Further, for each of the set of query types, the process 300 may include randomly selecting one or more of the plurality of sample queries, at step 314.

Further, for each sample query of the one or more of the plurality of sample queries, the process 300 may include retrieving a relevant set of the plurality of document embeddings based on the sample query (or sample query embeddings) and an associated query type from the vector database through the semantic search technique, at step 316. It should be noted the relevant set is retrieved from the plurality of document embeddings stored in the vector database at step 308. In continuation of the example above, the QRPG module 206 may randomly select one or more document chunks from the plurality document chunks. Further, the QRPG module 206 may input the one or more document chunks to the query generating LLM 224. The query generating LLM 224 may generate a plurality of straightforward sample queries and a plurality of illustrative sample queries. Further, the QRPG module 206 may randomly select one or more of the plurality of straightforward sample queries and one or more of the plurality of illustrative sample queries. Further, for each straightforward sample query, the RAG module 202 may retrieve a relevant set of the plurality of document embeddings based on the straightforward sample query (or straightforward sample query embeddings), from the vector database 218 through the semantic search technique. Similarly, for each illustrative sample query, the RAG module 202 may retrieve a relevant set of the plurality of document embeddings based on the illustrative sample query (or illustrative sample query embeddings) from the vector database 218 through the semantic search technique.

Further, for each sample query of the one or more of the plurality of sample queries, the process 300 may include preparing a sample prompt using the sample query and the relevant set of the plurality of document embeddings, at step 318. The sample prompt may include a predefined text, the sample query, and the relevant set of the plurality of document embeddings. Further, for each sample query of the one or more of the plurality of sample queries, the process 300 may include inputting the sample prompt to an LLM selected from the set of LLMs based on the associated query type of the sample query, at step 320.

Further, for each sample query of the one or more of the plurality of sample queries, the process 300 may include generating, via the selected LLM, a sample response for the sample prompt to obtain a sample query-response pair (for example, the sample query-response pair 232), at step 322. In continuation of the example above, the prompt preparation module 212 may prepare a sample prompt for each straightforward sample query. The sample prompt for each straightforward sample query may include a predefined text specific for straightforward queries, the straightforward sample query, and the relevant set of the plurality of document embeddings. Similarly, the sample prompt for each illustrative sample query may include a predefined text specific for illustrative queries, the sample illustrative query, and the relevant set of the plurality of document embeddings. Further, LLM module 214 may input the sample prompt for each straightforward query to the text-to-text model 226 and may input the sample prompt for each illustrative query to the causal model 228. The text-to-text model 226 may be the selected LLM for each straightforward sample query and the causal model 228 may be the selected LLM for each illustrative sample query. The selected LLM may generate a response for each sample query to obtain a sample query-response pair.

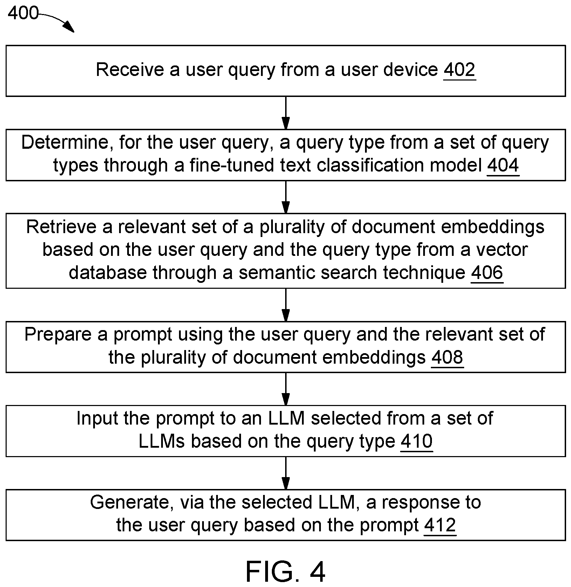

Referring now to FIG. 4, an exemplary process 400 for LLM-selection for response generation to user queries is depicted via a flow chart, in accordance with some embodiments of the present disclosure. The exemplary process 400 may be implemented by the computing device 102 of the system 100. The process 400 may include receiving a user query (for example, the user query 234) from a user device, at step 402. Further, the process 400 may include determining, for the user query, a query type from a set of query types through a fine-tuned text classification model (for example, the fine-tuned text classification model 222), at step 404. In some embodiments, the process 400 may include fine-tuning a text classification model using a fine-tuning dataset through a PEFT with an LoRA technique to obtain the fine-tuned text classification model. Each data element of the fine-tuning dataset may include a query and an associated query type label. By way of an example, the user may input a first user query. The text classification module 204 may receive the first user query. Further, the text classification module 204 may determine the query type of the first user query through the fine-tuned text classification model 222. The set of query types may include a factual (or straightforward) query type and an illustrative query type. The fine-tuned text classification model 222 may be a binary text classification model that may be configured to classify the user query into one of the two query types (i.e., the factual query type or the illustrative query type). The query type determined may be the factual query type.

Further, the process 400 may include retrieving a relevant set of a plurality of document embeddings based on the user query and the query type from a vector database (for example, the vector database 218) through a semantic search technique, at step 406. It should be noted that the vector database may be created from the plurality of document embeddings stored at step 308. In continuation of the example above, upon determining the query type, the text classification module 204 may send the first user query to the RAG module 202. The RAG module 202 may create query embeddings from the first user query using an embedding model. The RAG module 202 may then perform a semantic search on the vector database 218 using the query embeddings to identify the relevant set of the plurality of vector embeddings. Upon identifying, the RAG module 202 may retrieve the relevant set of the plurality of vector embeddings from the vector database 218.

Further, the process 400 may include preparing a prompt using the user query and the relevant set of the plurality of document embeddings, at step 408. Further, the process 400 may include inputting the prompt to an LLM selected from a set of LLMs based on the query type, at step 410. Each of the set of LLMs may be configured to optimally process queries of one of the set of query types. Further, the process 400 may include generating, via the selected LLM, a response to the user query based on the prompt, at step 412. In continuation of the example above, the prompt preparation module 212 may prepare a prompt using a predefined text, the query embeddings of the first user query, and the relevant set of the plurality of document embeddings. The prompt preparation module 212 may send the prompt to the LLM module 214. The LLM module 214 may input the prompt to the text-to-text model 226 as the query type of the first user query is the factual query type. Further, the LLM module 214, via the text-to-text model 226, may generate the response to the first user query based on the prompt.

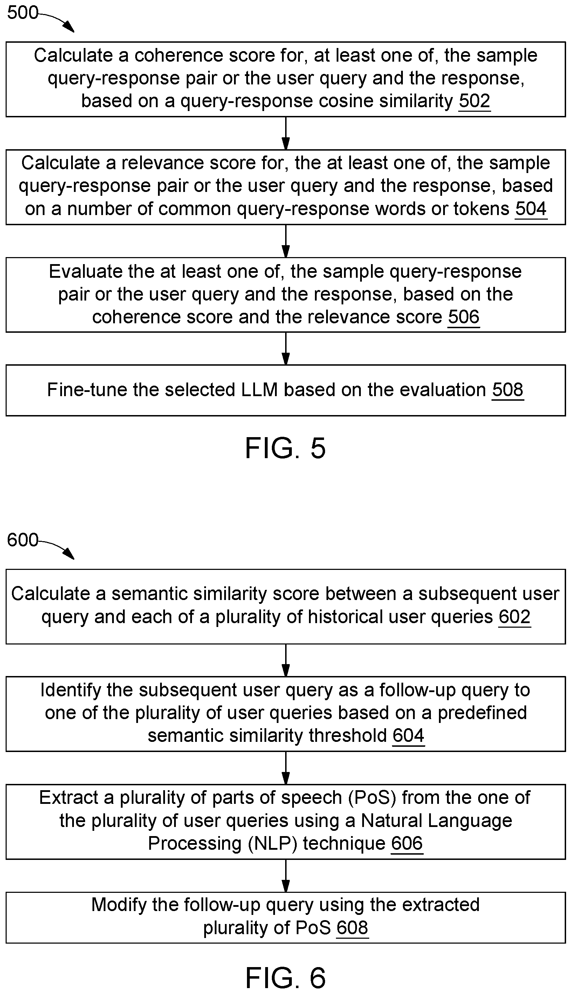

Referring now to FIG. 5, an exemplary process 500 for evaluating query-response pairs is depicted via a flow chart, in accordance with some embodiments of the present disclosure. The process 500 may be implemented by the computing device 102 of the system 100. The process 500 may include calculating a coherence score for, at least one of, the sample query-response pair or the user query and the response, based on a query-response cosine similarity, at step 502. The coherence score may be calculated from cosine similarity between the retrieved prompt text (including the predefined text, the relevant set of document embeddings, and the user query) and response embeddings

Further, the process 500 may include calculating a relevance score for, the at least one of, the sample query-response pair (for example, the sample query-response pair 232) or the user query (for example, the user query 234) and the response (for example, the response 238), based on a number of common query-response words or tokens, at step 504. The relevance score may be calculated from common words/tokens between the retrieved prompt text (including the predefined text, the relevant set of embeddings, and the user query) and the response with respect to the length of the response tokens/words.

It should be noted that there may be a trade-off between the coherence score and the relevance score. If the generated response is highly semantically aligned with the retrieved text, the coherence score may be high. If the response includes a significant overlap of words or tokens between the retrieved text and the response, the relevance score may be high. If the semantic alignment of the generated response with the retrieved text is low, the coherence score may be low. If the response includes fewer overlapping (or common) words or tokens between the retrieved text and the response, the relevance score may be low. It should be noted that for the text-to-text model, a high relevance score is more desirable. On the other hand, for the causal model, a high coherence score is desirable.

Further, the process 500 may include evaluating the at least one of, the sample query-response pair or the user query and the response, based on the coherence score and the relevance score, at step 506. Further, the process 500 may include fine-tuning the selected LLM based on the evaluation, at step 508. By way of an example, the evaluation module 210 may receive the sample query-response pair from the QRPG module206. Further, the evaluation module 210 may calculate the coherence score for the sample query-response pair based on a cosine similarity between the sample query and the sample response of the sample query-response pair. Further, the evaluation module 210 may calculate a relevance score for the sample query-response pair based on a number of common words or tokens between the sample query and the sample response of the sample query-response pair. Further, the evaluation module 210 may evaluate the evaluation results (i.e., the coherence score and the relevance score) based on a comparison of the coherence score and the relevance score with a predefined threshold coherence score and a predefined threshold relevance score, respectively. Further, the fine-tuning module 208 may fine-tune the selected LLM based on the evaluation. For example, when the coherence score or the relevance score is less than the predefined threshold coherence score or the predefined threshold relevance score, respectively, the selected LLM may fine-tune (or auto-tune) the selected LLM based on the evaluation to obtain optimal evaluation results.

Combining text-to-text and causal models may provide a balanced solution. For straightforward questions, the text-to-text model may ensure a high relevance by matching words/tokens closely with the retrieved text. For illustrative questions, the causal model may maintain a high coherence by generating clear and well-organized explanations. Thus, a hybrid approach employing the text-to-text model and the causal model may leverage strengths of both models. The hybrid approach may also ensure comprehensive answers that are both coherent and relevant depending on the nature (i.e., query type) of the query.

By way of an example, Table 1 below provides evaluation results of a text-to-text model (such as the text-to-text model 226), in accordance with some embodiments.

| Model | Question | | Prompt | Generated Answer | Evaluation Results | |
|---|---|---|---|---|---|---|
| | | | | | Coherence Score | Relevance Score |
| Text-To-Text | Stand-alone | What is the standard coefficient of friction to be used? | "Use the following pieces of context to answer the users question. If you don't know the answer, just say that you don't know, don't try to make up an answer. Context: { context} . Question: {question}" | 0.2 | 0.32 | 1.00 |
| | | what are the element types to be considered for turbo modeling? | | 1st order tetrahedron | 0.78 | 1.00 |
| | | why contacts are used for slips joints? | | The relative motion of parts connected with a slip joint has to be considered by introducing contact conditions between these parts | 0.35 | 1.00 |

By way of an example, Table 2 below provides evaluation results of a causal model (such as the causal model 228), in accordance with some embodiments.

| Model | Question | | Prompt | Generated Answer | Evaluation Metrics | |
|---|---|---|---|---|---|---|
| | | | | | Coherence Score | Relevance Score |
| Causal | Stand-alone | Illustrate the first cooling step in transient simulation? | prompt = f"""Given the following context and a question, generate an in detailed answer with maximum of 500 words based on this context only. In the answer try to provide as much text as possible from "response" section in the source document context without making much changes. If the answer is not found in the context, kindly state "I don't know". Don't try to make up an answer. Context: {context}. Question: {question}""" | First Cooling-down Step Definition••\n\nThe first cooling -down step in transient simulation involves the gradual decrease in temperature of the hot end TMF during the off-state period. The process is similar to the first heating step, but with the following key differences:\n\n••r Temperature Decrease: "\n- The temperature of the TMF is gradually reduced from the initial high temperature to the final temperature-\n- The rate of temperature decrease is determined by the heat transfer parameters, such as the thermal conductivity and specific heat capacity of the TMF material.\n\n••2. Time Duration:••\n-The first cooling - down step typically lasts longer than the first heating step-ln-It is usually defined by the duration of the ozl.zate period, which is the time between the end pf the heating slep and the start of the cociing step.\n\n••3. Thermal Analysis:••\n- the first cooling -down step involves simulating the heat transfer processes within the TMF during the cooling period.\n-This includes modeling the conduction, convection, and radiation heat transfer mechanisms.\n\n••4. Output:••\n- The output of the first cooling down *tep includes temperature profiles of the TMF, which can be used to visualize the heat transfer process and validate the | 0.89 | 0.35 |

Referring now to FIG. 6, an exemplary process 600 for managing follow-up queries to user queries, in accordance with some embodiments of the present disclosure. The process 600 may be implemented by the computing device 102 of the system 100. The process 600 may include calculating a semantic similarity score between a subsequent user query and each of a plurality of historical user queries, at step 602. The plurality of historical user queries includes the user query. In other words, upon generating the response to the user query, the user query and the corresponding response in a historical database (for example, the historical database 220). The historical database may include the plurality of historical user queries (including the user query) and a corresponding plurality of historical responses (including the response). In an embodiment, there may be a limit to maximum number of historical user queries and historical responses that may be stored in the historical database.

Further, the process 600 may include identifying the subsequent user query as a follow-up query to one of the plurality of historical user queries based on a predefined semantic similarity threshold, at step 604. Further, the process 600 may include extracting, by the processor, a plurality of PoS from the one of the plurality of historical user queries using an NLP technique, at step 606. Further, the process 600 may include modifying the follow-up query using the extracted plurality of PoS, at step 608.

The modification (i.e., rephrasing) of the follow-up query may be user-controlled or model-controlled. A user-controlled rephrased follow-up query may maintain original intent of the follow-up query while accommodating user preferences in wording of the modified follow-up query. The user-controlled rephrasing may provide a better user control over the modified follow-up query. A model-controlled rephrased follow-up query may auto rephrase the follow-up query using a framework for conversation based on the retrieved document embeddings. However, the model-controlled rephrasing may provide an alternative wording to the rephrased follow-up query that may not necessarily match the exact user preferences. Additionally, the model-controlled rephrasing may fail to provide user control over the rephrased question.

By way of an example, a user query "What is the standard coefficient of friction to be used?" may be stored in the historical database and the user may input a subsequent query "Can we consider 0.9?". However, when provided as an input to the LLM module 214, the subsequent query may lack any context and the generated response may not be relevant to the user. Thus, the follow-up query managing module 216, upon receiving the subsequent query, may identify the subsequent query as the follow-up query to the user query when the semantic similarity score between the subsequent query and the user query is above a predefined threshold score. The follow-up query managing module 216 may modify the follow-up query using the plurality of PoS extracted from the user query through either the user-controlled rephrasing or the model-controlled rephrasing.

Through the user-controlled rephrasing, the follow-up query managing module 216 may extract the plurality of PoS in backend. It should be noted that in the user-controlled rephrasing, the follow-up query managing module 216 may be a developer-implemented functionality. Thus, for the user query "What is the standard coefficient of friction to be used?", the terms "standard", "coefficient", and "friction" may be the extracted plurality of PoS. The plurality of PoS may be added to the follow-up query for added context. The modified follow-up query may be "Can we consider 0.9 for standard coefficient friction?". The relevant set of the plurality of embeddings may be retrieved based on the modified follow-up query. Further, the relevant set of the plurality of embeddings, the modified follow-up query, and the predefined text may be provided as a prompt to the LLM module 214. As will be appreciated, when the modified follow-up query is provided as an input to the LLM module 214, the generated response is likely to be more relevant as the plurality of PoS from the user query add more context to the follow-up query. The follow-up query, along with the generated response, may be rendered via the GUI on the user device. However, the user can provide feedback to the developer if the generated response is unsatisfactory. A developer at backend may modify the developer-implemented functionality to enhance the user experience. Thus, the user is provided with more flexibility to modify the follow-up query based on a previous relevant query in accordance with original intent of the user.

In the model-controlled rephrasing, the follow-up query managing module 216 may be implemented as a built-in functionality of a framework (such as the computing device 102). It should be noted that a developer at backend may not have control on the built-in functionality. The follow-up query may be modified at backend by the built-in functionality. The modified follow-up query may be "What is the standard frictional coefficient to be used with a friction coefficient of 0.9?". In this case, the modified follow-up query includes alternative wording "frictional", that may not necessarily match user preferences. As will be appreciated, while the modified follow-up query may include an added context to the follow-up query, the original intent of the user may not be properly captured. Thus, when the model-controlled modified follow-up query is provided as an input to the LLM module 214, the generated response is likely to be less relevant than the user-controlled modified follow-up query. If the generated response is unsatisfactory to the user, the user may provide a feedback to the developer. However, since the developer lacks control on the framework used, the developer may need to consider providing a different framework with a different built-in functionality.

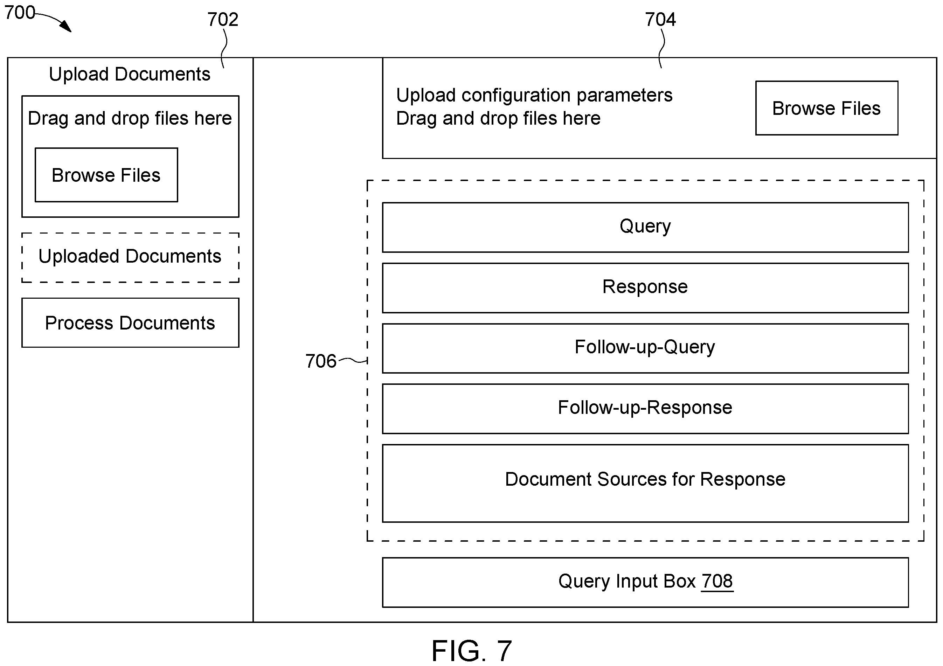

Referring now to FIG. 7, an exemplary chatbot GUI 700, in accordance with some embodiments of the present disclosure. In an embodiment, the chatbot GUI 700 may be rendered by the computing device 102. The GUI 700 may include a plurality of sections. The plurality of sections may include a document upload section 702, a configuration file upload section 704, a query-response section 706, and a query input box 708. The document upload section 702 may allow the user (or the administrator) to upload the plurality of documents (such as the plurality of documents 230). The document upload section 702 may provide a drag and drop option for uploading the plurality of documents and an option to browse files for upload.

The configuration file upload section 704 may allow the user (or the administrator) to upload a configuration file. The configuration file may include a set of configuration parameters. By way of an example, the set of configuration parameters may include, but may not be limited to, document processing parameters (e.g., chunk size, chunk overlap, and tokenizer) and model output parameters (e.g., temperature (0-1), sampling (true or false), top-p (0.0 to 1.0), and top-k (fixed number of top probable tokens)). Uploading the configuration file may be optional. If the user may not upload the configuration file, a default set of configuration parameters may be considered. The user may experiment with the set of configuration parameters and provide timely feedback for the further enhancement of model performance.

By way of an example, content of a sample configuration file in .json format is described below, in accordance with some embodiments.

```
 {
 "sampling": true,
 "temperature": 0.2,
 "max_new_tokens": 512,
 "chunk_size": 150,
 "chunk_overlap": 10,
 }
```

A set of LLM parameters (including the set of configuration parameters) may be defined for various functionalities. By way of an example, the set of LLM parameters may include, but may not be limited to, architecture (transformer-based models or others as applicable), task type, number of trained parameters (millions, billions, or other scales), document embedding model (sentence transformers or other embedding models), vector database (FAISS, ChromaDB, or other vector storage solutions), max sequence length (number of words/tokens) - (arbitrary (e.g., up to 512 tokens, or larger if needed)), retriever parameters (e.g., search type (Cosine similarity, Euclidean distance, or other similarity/distance measures) and number of retrieved relevant documents (configurable (e.g., 3, 5, 10, or as needed))), evaluation metrics (e.g., based on the cosine similarity between retrieved text and response embeddings, and based on the common words/tokens between retrieved text (prompt + question + context) and response with respect to the length of response tokens/words), and the set of configuration parameters (i.e., document processing parameters (e.g., chunk size, chunk overlap, and tokenizer) and model output parameters (e.g., temperature (0-1), sampling (true or false), top-p (0.0 to 1.0), and top-k (fixed number of top probable tokens))).

By way of an example, Table 3 below provides an exemplary set of LLM parameters, in accordance with some embodiments.

| **S No** | **Parameters** | | **Large Language Models** | |
|---|---|---|---|---|
| | | | **Text-to-Text** | **Causal** |
| 1 | Architecture | | Transformer | Griffin |
| 2 | Task Type | | Text-to-Text Generation | Text Generation |
| 3 | Number of Trained Parameters | | 783M | 2.68B |
| 4 | Document Embedding Model | | all-mpnet-base-v2 | |
| 5 | Vector Database | | FAISS | |
| 6 | Max Sequence Length (Number of words/tokens) | | 512 | Arbitrary length |
| 7 | Document Processing | Chunk Size | 150 | |
| | | Chunk Overlap | 10 | |
| | | Tokenizer | Text-to-Text | Causal |
| 8 | Retriever Parameters | Search Type | Similarity | |
| | | Number of retrieved relevant documents | 3 | |
| 9 | Model Output | Temperature (0-1) | NA (Default) | |
| | | Sampling (True or False) | False (Default) | |
| | | Top-p (0.0 to 1.0) | NA (Default) | |
| | | Top-k (fixed number of top probable tokens) | NA (Default) | |
| 10 | Evaluation Metrics | Based on the Cosine similarity between retrieved text (prompt + question + context) and response embeddings | Coherence Score | |
| | | Based on the common words/tokens between retrieved text (prompt + question + context) and response with respect to the length of response tokens/words | Relevance Score | |

The query-response section 706 may display the user query and subsequent user queries (follow-up queries), and corresponding responses generated by the selected LLM (i.e., a small chat history). The query-response section 706 may also include a document sources section. The document sources section may display a list of sources used by the selected LLM to generate the response. The query input box 708 may allow the user (or administrator) to input the user query.

As will be also appreciated, the above-described techniques may take the form of computer or controller implemented processes and apparatuses for practicing those processes. The disclosure can also be embodied in the form of computer program code containing instructions embodied in tangible media, such as floppy diskettes, solid state drives, CD-ROMs, hard drives, or any other computer-readable storage medium, wherein, when the computer program code is loaded into and executed by a computer or controller, the computer becomes an apparatus for practicing the invention. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

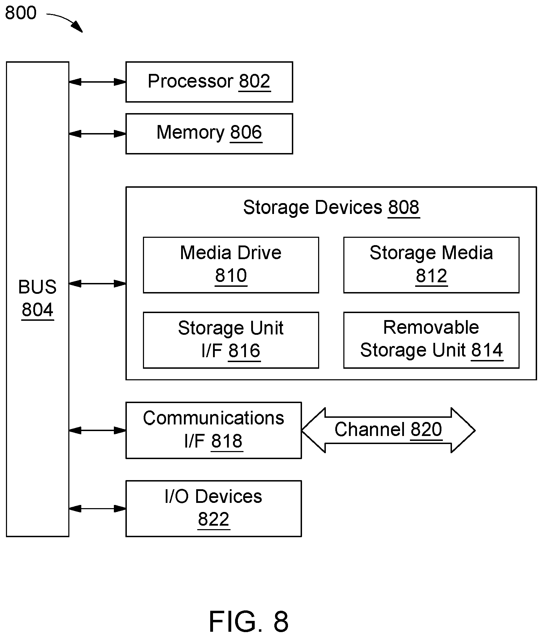

The disclosed methods and systems may be implemented on a conventional or a general-purpose computer system, such as a personal computer (PC) or server computer. Referring now to FIG. 8, an exemplary computing system 800 that may be employed to implement processing functionality for various embodiments (e.g., as a SIMD device, client device, server device, one or more processors, or the like) is illustrated. Those skilled in the relevant art will also recognize how to implement the invention using other computer systems or architectures. The computing system 800 may represent, for example, a user device such as a desktop, a laptop, a mobile phone, personal entertainment device, DVR, and so on, or any other type of special or general-purpose computing device as may be desirable or appropriate for a given application or environment. The computing system 800 may include one or more processors, such as a processor 802 that may be implemented using a general or special purpose processing engine such as, for example, a microprocessor, microcontroller or other control logic. In this example, the processor 802 is connected to a bus 804 or other communication medium. In some embodiments, the processor 802 may be an Artificial Intelligence (AI) processor, which may be implemented as a Tensor Processing Unit (TPU), or a graphical processor unit, or a custom programmable solution Field-Programmable Gate Array (FPGA).

The computing system 800 may also include a memory 806 (main memory), for example, Random Access Memory (RAM) or other dynamic memory, for storing information and instructions to be executed by the processor 802. The memory 806 also may be used for storing temporary variables or other intermediate information during execution of instructions to be executed by the processor 802. The computing system 800 may likewise include a read only memory ("ROM") or other static storage device coupled to bus 804 for storing static information and instructions for the processor 802.

The computing system 800 may also include a storage devices 808, which may include, for example, a media drive 810 and a removable storage interface. The media drive 810 may include a drive or other mechanism to support fixed or removable storage media, such as a hard disk drive, a floppy disk drive, a magnetic tape drive, an SD card port, a USB port, a micro USB, an optical disk drive, a CD or DVD drive (R or RW), or other removable or fixed media drive. A storage media 812 may include, for example, a hard disk, magnetic tape, flash drive, or other fixed or removable medium that is read by and written to by the media drive 810. As these examples illustrate, the storage media 812 may include a computer-readable storage medium having stored therein particular computer software or data.

In alternative embodiments, the storage devices 808 may include other similar instrumentalities for allowing computer programs or other instructions or data to be loaded into the computing system 800. Such instrumentalities may include, for example, a removable storage unit 814 and a storage unit interface 816, such as a program cartridge and cartridge interface, a removable memory (for example, a flash memory or other removable memory module) and memory slot, and other removable storage units and interfaces that allow software and data to be transferred from the removable storage unit 814 to the computing system 800.

The computing system 800 may also include a communications interface 818. The communications interface 818 may be used to allow software and data to be transferred between the computing system 800 and external devices. Examples of the communications interface 818 may include a network interface (such as an Ethernet or other NIC card), a communications port (such as for example, a USB port, a micro USB port), Near field Communication (NFC), etc. Software and data transferred via the communications interface 818 are in the form of signals which may be electronic, electromagnetic, optical, or other signals capable of being received by the communications interface 818. These signals are provided to the communications interface 818 via a channel 820. The channel 820 may carry signals and may be implemented using a wireless medium, wire or cable, fiber optics, or other communications medium. Some examples of the channel 820 may include a phone line, a cellular phone link, an RF link, a Bluetooth link, a network interface, a local or wide area network, and other communications channels.

The computing system 800 may further include Input/Output (I/O) devices 822. Examples may include, but are not limited to a display, keypad, microphone, audio speakers, vibrating motor, LED lights, etc. The I/O devices 822 may receive input from a user and also display an output of the computation performed by the processor 802. In this document, the terms "computer program product" and "computer-readable medium" may be used generally to refer to media such as, for example, the memory 806, the storage devices 808, the removable storage unit 814, or signal(s) on the channel 820. These and other forms of computer-readable media may be involved in providing one or more sequences of one or more instructions to the processor 802 for execution. Such instructions, generally referred to as "computer program code" (which may be grouped in the form of computer programs or other groupings), when executed, enable the computing system 800 to perform features or functions of embodiments of the present invention.

In an embodiment where the elements are implemented using software, the software may be stored in a computer-readable medium and loaded into the computing system 800 using, for example, the removable storage unit 814, the media drive 810 or the communications interface 818. The control logic (in this example, software instructions or computer program code), when executed by the processor 802, causes the processor 802 to perform the functions of the invention as described herein.

Various embodiments provide method and system for LLM-selection for response generation to user queries. The disclosed method and system may receive a user query from a user device. Further, the disclosed method and system may determine, for the user query, a query type from a set of query types through a fine-tuned text classification model. Further, the disclosed method and system may retrieve a plurality of document embeddings based on the user query and the query type from a vector database through a semantic search technique. Further, the disclosed method and system may prepare a prompt using the user query and the plurality of document embeddings. Further, the disclosed method and system may input the prompt to an LLM selected from a set of LLMs based on the query type. Each of the set of LLMs is configured to optimally process queries of one of the set of query types. Further, the disclosed method and system may generate, via the selected LLM, a response to the user query based on the prompt.

Thus, the disclosed techniques try to overcome the technical problem of LLM-selection for response generation to user queries. The techniques provide efficient retrieval of relevant texts and answering of user queries from relevant documents. Further, the techniques may integrate with existing systems (such as existing RAG-assisted LLMs) to provide instant answers to user queries. Further, the techniques provide a cost-effective solution that can be used with open-source LLMs. Further, the techniques enhance team efficiency by reducing search time and increasing independence. Further, the techniques provide an enhanced user engagement by generating responses for follow-up questions based on the chat history, leveraging auto-learning capability to enhance user engagement and interaction. Further, the techniques generate question answer pairs for uploaded documents prior to user interaction. This demonstrates AI-driven document understanding and question formulation to administrators, enabling easier validation. Further, administrators may tweak processing and response parameters via a JSON file, enabling experimentation and feedback for model improvement. Further, the techniques use NLP techniques to identify and rephrase user follow-up questions while maintaining the original intent. Further, the techniques provide a custom data-trained binary text classification model to predict an appropriate routing (text-to-text model or causal model) for user questions. The techniques combine text-to-text generation models for high relevance in straightforward questions and causal models for high coherence in illustrative questions, ensuring comprehensive and relevant responses using both models.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the device itself as the claimed steps provide a technical solution to a technical problem.

The specification has described method and system for LLM-selection for response generation to user queries. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.

## Claims

1. A method (400) of Large Language Model (LLM)-selection for response generation to user queries, the method (400) comprising:
receiving (402), by a processor (104), a user query from a user device;
determining (404), by the processor (104), for the user query, a query type from a set of query types through a fine-tuned text classification model;
retrieving (406), by the processor (104), a relevant set of a plurality of document embeddings based on the user query and the query type from a vector database through a semantic search technique;
preparing (408), by the processor (104), a prompt using the user query and the relevant set of the plurality of document embeddings;
inputting (410), by the processor (104), the prompt to an LLM selected from a set of LLMs based on the query type, wherein each of the set of LLMs is configured to optimally process queries of one of the set of query types; and
generating (412), by the processor (104) via the selected LLM, a response to the user query based on the prompt.

2. The method as claimed in claim 1, comprising:
receiving (302), by the processor (104), a plurality of documents from an administrator device;
generating (304), by the processor (104), a plurality of document chunks from the plurality of documents;
creating (306), by the processor (104), the plurality of document embeddings via an embedding model from the plurality of document chunks; and
storing (308), by the processor (104), the plurality of document embeddings in the vector database.

3. The method as claimed in claim 2, comprising:
randomly selecting (310), by the processor (104), one or more of the plurality of document chunks; and
for each of the set of query types,
generating (312), by the processor (104) via a query generating LLM, a plurality of sample queries based on the one or more of the plurality of document chunks; and
randomly selecting (314), by the processor (104), one or more of the plurality of sample queries;
for each sample query of the one or more of the plurality of sample queries,
retrieving (316), by the processor (104), the relevant set of the plurality of document embeddings based on the sample query and an associated query type from the vector database through the semantic search technique;
preparing (318), by the processor (104), a sample prompt using the sample query and relevant set of the plurality of document embeddings;
inputting (320), by the processor (104), the sample prompt to an LLM selected from the set of LLMs based on the associated query type of the sample query; and
generating (322), by the processor (104) via the selected LLM, a sample response for the sample prompt to obtain a sample query-response pair.

4. The method as claimed in claim 3, comprising:
calculating (502), by the processor (104), a coherence score for, at least one of, the sample query-response pair or the user query and the response, based on a query-response cosine similarity;
calculating (504), by the processor (104), a relevance score for, the at least one of, the sample query-response pair or the user query and the response, based on a number of common query-response words or tokens;
evaluating (506), by the processor (104), the at least one of, the sample query-response pair or the user query and the response, based on the coherence score and the relevance score; and
fine-tuning (508), by the processor (104), the selected LLM based on the evaluation.

5. The method as claimed in claim 1, comprising:
calculating (602), by the processor (104), a semantic similarity score between a subsequent user query and each of a plurality of historical user queries, wherein the plurality of historical user queries comprises the user query;
identifying (604), by the processor (104), the subsequent user query as a follow-up query to one of the plurality of historical user queries based on a predefined semantic similarity threshold;
extracting (606), by the processor (104), a plurality of parts of speech (PoS) from the one of the plurality of historical user queries using a Natural Language Processing (NLP) technique; and
modifying (608), by the processor (104), the follow-up query using the extracted plurality of PoS.

6. The method as claimed in claim 1, comprising fine-tuning a text classification model using a fine-tuning dataset through a Parameter Efficient Fine Tuning (PEFT) with a Low Rank Adaptation (LoRA) technique to obtain the fine-tuned text classification model, wherein each data element of the fine-tuning dataset comprises a query and an associated query type label.

7. A system (100) for LLM-selection for response generation to user queries, the system comprising:
a processor (104); and
a memory (106) communicatively coupled to the processor (104), wherein the memory (106) stores processor instructions, which when executed by the processor (104), cause the processor (104) to:
receive (402) a user query from a user device;
determine (404) for the user query, a query type from a set of query types through a fine-tuned text classification model;
retrieve (406) a relevant set of a plurality of document embeddings based on the user query and the query type from a vector database through a semantic search technique;
prepare (408) a prompt using the user query and the relevant set of the plurality of document embeddings;
input (410) the prompt to an LLM selected from a set of LLMs based on the query type, wherein each of the set of LLMs is configured to optimally process queries of one of the set of query types; and
generate (412), via the selected LLM, a response to the user query based on the prompt.

8. The system (100) as claimed in claim 7, wherein the processor instructions, on execution, cause the processor (104) to:
receive (302) a plurality of documents from an administrator device;
generate (304) a plurality of document chunks from the plurality of documents;
create (306) the plurality of document embeddings via an embedding model from the plurality of document chunks; and
store (308) the plurality of document embeddings in the vector database.

9. The system (100) as claimed in claim 8, wherein the processor instructions, on execution, cause the processor (104) to:
randomly select (310) one or more of the plurality of document chunks; and
for each of the set of query types,
generate (312), via a query generating LLM, a plurality of sample queries based on the one or more of the plurality of document chunks; and
randomly select (314) one or more of the plurality of sample queries.
for each sample query of the one or more of the plurality of sample queries,
retrieve (316) the relevant set of the plurality of document embeddings based on the sample query and an associated query type from the vector database through the semantic search technique;
prepare (318) a prompt using the sample query and the relevant set of the plurality of document embeddings;
input (320) the sample query to an LLM selected from the set of LLMs based on the associated query type of the sample query; and
generate (322), via the selected LLM, a sample response for the sample query to obtain a sample query-response pair.

10. The system (100) as claimed in claim 7, wherein the processor instructions, on execution, cause the processor (104) to:
calculate (602) a semantic similarity score between a subsequent user query and each of a plurality of historical user queries, wherein the plurality of historical user queries comprises the user query;
identify (604) the subsequent user query as a follow-up query to one of the plurality of historical user queries based on a predefined semantic similarity threshold;
extract (606) a plurality of PoS from the one of the plurality of historical user queries using an NLP technique; and
modify (608) the follow-up query using the extracted plurality of PoS.
